# FASCICULE DE BREVET EUROPEEN

(11) **EP 3 346 538 B1**
(45) Date de publication et mention de la délivrance du brevet: **14.08.2019**
(21) Numéro de dépôt: 18150108.1
(22) Date de dépôt: 02.01.2018
(51) Int. Cl.: H01M 10/052, H01M 2/08, H01M 10/0566, H01M 10/058, H01M 10/0525, H01M 2/10, H01M 4/02, H01M 10/0565, H01M 4/64

(54) **ACCUMULATEUR ÉLECTROCHIMIQUE AU LITHIUM IONIQUE, À ÉTANCHÉITÉ AMÉLIORÉE**
ELEKTROCHEMISCHER LITHIUM-IONEN-AKKUMULATOR MIT VERBESSERTER DICHTIGKEIT
LITHIUM ION ELECTROCHEMICAL CELL, WITH IMPROVED SEALING

(30) Priorité: 05.01.2017 FR 1750097
(43) Date de publication de la demande: 11.07.2018
(73) Titulaire: Commissariat à l'énergie atomique et aux énergies alternatives, 75015 Paris (FR)
(72) Inventeur: CHAMI, Marianne, 38600 FONTAINE (FR); DEWULF, Frédéric, 38500 VOIRON (FR)
(74) Mandataire: Brevalex

(56) Documents cités:
- EP-A2- 0 975 042
- US-A1- 2007 154 789
- US-A1- 2011 008 672
- US-A1- 2013 209 878

## Description

### DOMAINE TECHNIQUE

L'invention se rapporte au domaine des accumulateurs électrochimiques au lithium, qui fonctionnent selon le principe d'insertion-désinsertion, ou autrement dit d'intercalation-désintercalation, de lithium dans au moins une électrode.

Plus spécifiquement, l'invention se rapporte à un accumulateur électrochimique au lithium ionique, plus communément appelé « batterie Li-ion », dont l'étanchéité vis-à-vis de l'électrolyte liquide qu'il comprend est améliorée.

Cet accumulateur peut aussi bien être une batterie Li-ion à architecture monopolaire qu'une batterie Li-ion à architecture bipolaire.

L'invention trouve donc application dans tous les domaines où des batteries Li-ion à architecture monopolaire ou bipolaire sont susceptibles d'être utilisées et, notamment, dans la production de véhicules électriques ou hybrides et de dispositifs électroniques portables (téléphones, tablettes tactiles, ordinateurs, appareils photographiques, caméscopes, etc).

### ÉTAT DE LA TECHNIQUE

Il existe deux catégories de batteries Li-ion, à savoir :
- des batteries Li-ion à architecture dite « monopolaire », qui ne comprennent qu'une seule cellule électrochimique (une cellule électrochimique étant composée d'une électrode positive et d'une électrode négative séparées l'une de l'autre par un électrolyte), ce type d'architecture étant essentiellement réalisée par bobinage ou par empilement ; et
- des batteries Li-ion à architecture dite « bipolaire », qui comprennent un empilement de plusieurs cellules électrochimiques qui sont séparées les unes des autres par un collecteur de courant se présentant sous la forme d'une plaque, empilement dans lequel une face de chaque collecteur de courant est au contact de l'électrode positive d'une cellule électrochimique tandis que l'autre face de chaque collecteur de courant est au contact de l'électrode négative de la cellule électrochimique adjacente.

L'architecture d'une batterie Li-ion bipolaire correspond ainsi à la mise en série de plusieurs batteries Li-ion monopolaires par l'intermédiaire de collecteurs de courant - qui sont dits « bipolaires » - avec toutefois l'avantage d'avoir une résistance électrique réduite par rapport à celle obtenue pour un système qui résulterait d'un montage en série de batteries Li-ion monopolaires au moyen de connecteurs extérieurs.

Cette architecture bipolaire permet également de limiter la masse de la batterie et d'éviter les volumes inutiles.

La principale difficulté à laquelle se heurtent les concepteurs de batteries bipolaires est l'obtention d'une parfaite étanchéité à l'électrolyte - qui est liquide dès lors que les batteries sont dédiées à des applications de forte puissance - entre deux cellules électrochimiques adjacentes.

Cette étanchéité a une grande importance car une fuite d'électrolyte liquide d'une cellule électrochimique à l'autre peut provoquer l'apparition de court-circuits ioniques, ce qui entraîne alors un dysfonctionnement prématuré de la batterie.

Typiquement, l'étanchéité à un électrolyte liquide est assurée par un joint en une résine thermodurcie du type résine époxyde, ou en un adhésif du type adhésif acrylique, qui est déposé sur le pourtour de l'empilement de cellules électrochimiques comme décrit, par exemple, dans la demande internationale PCT WO 03/047021.

D'autres solutions d'étanchéité ont été proposées comme :
- celle de coller un film adhésif, souple et flexible, sur la périphérie des collecteurs de courant bipolaires (cf. le brevet US 7,220,516) ;
- celle de munir la périphérie des collecteurs de courant bipolaires d'une barrière en polymère fluoré, doublée d'un joint étanche en un polymère qui est agencé à l'extérieur de cette barrière (cf. le brevet US 7,097,937) ;
- celle de jouer sur la taille des collecteurs de courant bipolaires de sorte que les parois latérales de deux cellules électrochimiques adjacentes soient décalées transversalement l'une par rapport à l'autre par rapport à l'axe d'empilement de ces cellules (cf. la demande de brevet EP 2 073 300) ; ou encore
- celle de réaliser les collecteurs de courant bipolaires sous la forme de grilles ou de feuilles métalliques qui sont logées dans une bande en un matériau isolant dont la périphérie a pour fonction de constituer une zone d'étanchéité (cf. la demande internationale PCT WO 2011/157751).

Par ailleurs, il a été proposé de s'affranchir de l'utilisation d'un électrolyte liquide en remplaçant celui-ci par un électrolyte polymère gélifié.

L'emploi d'un électrolyte polymère gélifié est certes intéressant en termes d'étanchéité car ce type d'électrolyte s'écoule difficilement mais il présente l'inconvénient de ralentir la circulation des ions lithium de l'électrolyte entre les électrodes positives et négatives des cellules électrochimiques. Or, les batteries Li-ion bipolaires sont des batteries qui présentent une faible densité d'énergie et dont le but est de fonctionner en puissance, ce qui implique que les ions lithium de l'électrolyte puissent circuler rapidement. L'emploi d'un électrolyte gélifié conduit donc à de moindres performances.

Les Inventeurs se sont donc fixé pour but de proposer une nouvelle solution qui permette d'améliorer encore l'étanchéité à un électrolyte liquide entre deux cellules électrochimiques d'une batterie Li-ion bipolaire et, par là même, de prévenir tout dysfonctionnement prématuré de ce type de batterie.

Ils se sont de plus fixé pour but que cette solution puisse aussi être utilisée pour améliorer l'étanchéité à un électrolyte liquide d'une batterie Li-ion monopolaire, notamment du type à emballage souple.

Ils se sont encore fixé pour but que cette solution soit simple à mettre en oeuvre et ait un coût compatible avec une fabrication industrielle de batteries Li-ion et ce, qu'elles soient monopolaires ou bipolaires.

### EXPOSÉ DE L'INVENTION

Ces buts sont atteints par l'invention qui propose, en premier lieu, un accumulateur électrochimique au lithium ionique à architecture monopolaire par empilement - plus simplement appelé « batterie Li-ion monopolaire » dans ce qui suit -, qui comprend dans un emballage deux collecteurs de courant entre lesquels est disposée une cellule électrochimique, la cellule électrochimique comprenant une électrode positive, une électrode négative et un séparateur qui est intercalé entre l'électrode positive et l'électrode négative et qui est imbibé d'un électrolyte liquide comprenant un sel de lithium en solution dans un solvant organique, et qui est caractérisé en ce que :
- l'emballage délimite avec les deux collecteurs de courant et la cellule électrochimique un espace qui entoure la cellule électrochimique et qui comprend un dispositif d'étanchéité et une zone de vide ;
- le dispositif d'étanchéité comprend un polymère qui gélifie au contact du solvant de l'électrolyte, moyennant quoi le polymère augmente de volume ; et
- la zone de vide est dimensionnée pour être comblée ultérieurement par le polymère suite à sa gélification.

Ainsi, selon l'invention, l'étanchéité à un électrolyte liquide d'une batterie Li-ion monopolaire par empilement est améliorée par la présence, dans un espace qui entoure la cellule électrochimique que comprend cette batterie, d'un dispositif d'étanchéité comprenant un polymère qui, au contact de l'électrolyte ou, plus précisément, du solvant de cet électrolyte, va se transformer en un gel et, donc, en un réseau tridimensionnel stable dans lequel l'électrolyte sera emprisonné et, par là même, immobilisé.

Compte-tenu que la gélification du polymère s'accompagne d'une augmentation de volume de ce polymère, il est également prévu, selon l'invention, de ménager, dans l'espace entourant la cellule électrochimique de la batterie, une zone de vide qui est destinée à permettre au polymère d'augmenter de volume sans que cette augmentation de volume ne se traduise par l'exercice de contraintes sur les collecteurs de courant et/ou sur la cellule électrochimique qui pourraient provoquer une déformation de ces éléments par, là même, nuire à l'intégrité à la fois structurelle et fonctionnelle de la batterie. Cette zone de vide sera donc progressivement remplie par le polymère au fur et à mesure de sa gélification jusqu'à être comblée par ce polymère.

Dans ce qui précède et ce qui suit, on entend :
- par électrode positive, l'électrode qui fait office de cathode quand l'accumulateur délivre du courant, c'est-à-dire lorsqu'il est en processus de décharge, et fait office d'anode lorsque l'accumulateur est en processus de charge ; et
- par électrode négative, l'électrode qui, à l'inverse, fait office d'anode quand l'accumulateur délivre du courant et fait office de cathode lorsque l'accumulateur est en processus de charge.

Conformément à l'invention, le dispositif d'étanchéité comprend, de préférence, au moins un cadre d'étanchéité qui entoure une première partie de la cellule électrochimique, tandis que la zone de vide entoure une deuxième partie de la cellule électrochimique.

Auquel cas, on préfère tout particulièrement que le dispositif d'étanchéité comprenne un premier cadre d'étanchéité qui entoure l'électrode positive de la cellule électrochimique et un deuxième cadre d'étanchéité qui entoure l'électrode négative de la cellule électrochimique, et que la zone de vide entoure le séparateur de la cellule électrochimique.

En variante toutefois, il est possible de prévoir que le dispositif d'étanchéité comprenne un cadre d'étanchéité qui entoure à la fois l'électrode positive, l'électrode négative et le séparateur de la cellule électrochimique et que la zone de vide entoure alors ce cadre d'étanchéité.

Dans tous les cas, l'espace délimité par l'emballage avec les deux collecteurs de courant et la cellule électrochimique comprend préférentiellement, de plus, un cadre de scellement qui entoure le dispositif d'étanchéité et la zone de vide. Outre de constituer une barrière d'étanchéité à l'électrolyte liquide additionnelle, ce cadre de scellement permet de rigidifier la structure de la batterie et participe, par là même, au maintien de son intégrité structurelle et fonctionnelle.

L'invention propose également un accumulateur électrochimique au lithium ionique à architecture bipolaire - plus simplement appelé « batterie Li-ion bipolaire » dans ce qui suit -, qui comprend dans un emballage deux collecteurs de courant terminaux entre lesquels est disposé un empilement, selon un axe X, de n cellules électrochimiques, n étant un entier au moins égal à 2, dans lequel :
- chaque cellule électrochimique comprend une électrode positive, une électrode négative et un séparateur qui est intercalé entre l'électrode positive et l'électrode négative et qui est imbibé d'un électrolyte liquide comprenant un sel de lithium en solution dans un solvant organique ;
- les n cellules électrochimiques sont séparées les unes des autres par n-1 collecteurs de courant bipolaires ;
et qui est caractérisé en ce que :
- l'emballage délimite, avec les deux collecteurs de courant terminaux, les n-1 collecteurs de courant bipolaires et les n cellules électrochimiques, n espaces qui entourent chacun une cellule électrochimique et qui comprennent chacun un dispositif d'étanchéité et une zone de vide ;
- le dispositif d'étanchéité de chaque espace comprend un polymère qui gélifie au contact du solvant de l'électrolyte, moyennant quoi le polymère augmente de volume ; et
- la zone de vide de chaque espace est dimensionnée pour être comblée ultérieurement par le polymère suite à sa gélification.

Ainsi, selon l'invention, l'amélioration de l'étanchéité à un électrolyte liquide entre deux cellules électrochimiques adjacentes d'une batterie Li-ion bipolaire est basée sur le même principe que précédemment, à savoir la présence dans chacun des espaces qui entourent les cellules électrochimiques, d'un dispositif d'étanchéité comprenant un polymère qui va former un gel au contact de l'électrolyte liquide, ce dispositif d'étanchéité étant, là également, accompagné d'une zone de vide propre à permettre au polymère d'augmenter de volume sans nuire à l'intégrité structurelle et fonctionnelle de la batterie.

Dans ce qui précède et ce qui suit, on entend par collecteur de courant bipolaire, un collecteur de courant qui sépare deux cellules électrochimiques l'une de l'autre et qui supporte sur une première face une électrode de l'une de ces cellules électrochimiques et sur une deuxième face opposée à la première face une électrode de signe opposé de l'autre de ces cellules électrochimiques.

Par ailleurs, on considère qu'une cellule électrochimique est adjacente à une autre cellule électrochimique lorsqu'elle précède ou suit immédiatement celle-ci dans l'empilement et n'est donc séparée d'elle que par un collecteur de courant bipolaire.

Comme précédemment, le dispositif d'étanchéité de chaque espace comprend, de préférence, au moins un cadre d'étanchéité qui entoure une première partie de la cellule électrochimique entourée par cet espace, tandis que la zone de vide entoure une deuxième partie de la cellule électrochimique entourée par cet espace.

Auquel cas, on préfère tout particulièrement que le dispositif d'étanchéité comprenne un premier cadre d'étanchéité qui entoure l'électrode positive de la cellule électrochimique et un deuxième cadre d'étanchéité qui entoure l'électrode négative de la cellule électrochimique, et que la zone de vide entoure le séparateur de la cellule électrochimique.

En variante toutefois, il est, là également, possible de prévoir que le dispositif d'étanchéité de chaque espace comprenne un cadre d'étanchéité qui entoure à la fois l'électrode positive, l'électrode négative et le séparateur de la cellule électrochimique entourée par cet espace, et que la zone de vide entoure alors ce cadre d'étanchéité.

De préférence, les n-1 collecteurs de courant bipolaires s'étendent, de l'axe X vers l'extérieur de la batterie, c'est-à-dire dans un plan orthogonal par rapport à cet axe, au droit des collecteurs de courant terminaux.

Auquel cas, chaque espace comprend, de préférence, un cadre de scellement qui entoure le dispositif d'étanchéité et la zone de vide que comprend cet espace et qui, là également, constitue une barrière d'étanchéité à l'électrolyte liquide additionnelle et permet de rigidifier la batterie.

En variante toutefois, il est possible de prévoir que les n-1 collecteurs de courant bipolaires s'étendent, de l'axe X vers l'extérieur de l'accumulateur, en-deçà des deux collecteurs de courant terminaux.

Auquel cas, la batterie Li-ion bipolaire comprend, de préférence, un seul cadre de scellement qui s'étend d'un collecteur de courant terminal à l'autre collecteur de courant terminal et qui entoure les *n* espaces et les *n-1* collecteurs de courant bipolaires.

Le nombre *n* de cellules électrochimiques que comporte la batterie Li-ion bipolaire est choisi de sorte à obtenir une tension totale Utot satisfaisante en fonction des applications auxquelles est destinée cette batterie, selon la règle Utot = *n* x Un, avec Un qui correspond à la tension du couple électrochimique employé. Typiquement, *n* peut être compris entre 2 et 26 pour le couple électrochimique phosphate de fer lithié (ou LFP)/titanate de lithium (ou LTO) dont la tension nominale Un est de 1,9 V. Ainsi, pour *n* = 26, la tension totale de la batterie Li-ion bipolaire est au moins égale à 48 V (Utot = 26 x 1,9 V ≈ 49 V), ce qui permet à la batterie Li-ion bipolaire de satisfaire, par exemple, à des applications dans des véhicules électriques. Pour un autre couple électrochimique dont la tension nominale Un est supérieure à celle du couple LFP/LTO, alors le nombre *n* de cellules électrochimiques peut être réduit pour obtenir la même tension totale.

Que la batterie Li-ion soit monopolaire ou bipolaire, les électrodes positive et négative de la (des) cellule(s) électrochimique(s) peuvent être constituées par tout matériau d'électrode apte à permettre une intercalation/désintercalation d'ions lithium, étant entendu que le matériau d'électrode négative doit être différent du matériau d'électrode positive.

Ainsi, l'électrode positive peut notamment être constituée d'un matériau d'électrode comprenant :
- au moins un oxyde lithié, tel qu'un oxyde lithié comprenant du manganèse de structure spinelle, un oxyde lithié de structure lamellaire ou un oxyde lithié à charpente polyanionique de formule LiM_{y}(XO_{z})ₙ dans laquelle M représente un élément choisi parmi Mn, Fe, Co, Ni, Cu, Mg, Zn, V, Ca, Sr, Ba, Ti, Al, Si, B et Mo, X représente un élément choisi parmi P, Si, Ge, S et As, et y, z et n sont des nombres entiers positifs, tel que le phosphate de fer lithié (LiFePO₄ ou LFP) ou le phosphate de cobalt lithié (LiCoPO₄ ou LCP) ;
- un polymère ou copolymère servant de liant, tel qu'un polymère fluoré du type poly(fluorure de vinylidène) (ou PVdF), un copolymère fluoré du type poly(fluorure de vinylidène-co-hexafluoropropylène) (ou PVdF-HFP) ou un mélange de ceux-ci ; et éventuellement
- un additif conducteur électronique, tel que des particules de noir de carbone, des fibres de carbone ou un mélange de celles-ci.

Quant à l'électrode négative, elle peut notamment être constituée d'un matériau d'électrode comprenant :
- un oxyde de titane lithié, tel qu'un oxyde de formule Li₍₄₋ₓ₎MₓTi₅O₁₂ ou Li₄M_{y}Ti_{(5-y)}O₁₂ dans laquelle x et y vont de 0 à 0,2, M représente un élément choisi parmi Na, K, Mg, Nb, Al, Ni, Co, Zr, Cr, Mn, Fe, Cu, Zn, Si et Mo, un oxyde de titane non lithié, tel que TiO₂, un oxyde de formule M_{y}Ti_{(5-y)}O₁₂ dans laquelle y va de 0 à 0,2 et M est un élément choisi parmi Na, K, Mg, Nb, Al, Ni, Co, Zr, Cr, Mn, Fe, Cu, Zn, Si et Mo, ou encore un matériau carboné tel que le graphite ;
- un polymère ou copolymère servant de liant du type de ceux précédemment mentionnés ; et éventuellement
- un additif conducteur électronique du type de ceux précédemment mentionnés.

De préférence, l'électrode positive est constituée d'un matériau d'électrode comprenant du phosphate de fer lithié LiFePO₄ tandis que l'électrode négative est constituée d'un matériau d'électrode comprenant du titanate de lithium Li₄Ti₅O₁₂ (ou LTO).

De préférence également, ces électrodes sont de type « sec », c'est-à-dire non gélifiées, pour garantir un fonctionnement optimal en puissance de la batterie Li-ion.

L'électrolyte liquide peut être tout électrolyte comprenant un sel de lithium en solution dans un solvant organique.

Ainsi, le sel de lithium peut notamment être choisi parmi l'hexafluorophosphate de lithium (LiPF₆), le perchlorate de lithium (LiClO₄), le tétrafluoroborate de lithium (LiBF₄), l'hexafluoroarsénate de lithium (LiAsF₆), le trifluorométhanesulfonate de lithium (LiCF₃SO₃), le bis(trifluorométhylsulfonyl)imide de lithium (LiN(CF₃SO₂)₂ ou LiTFSI), le bis(perfluoroéthylsulfonyl)imide de lithium (LiN(C₂F₅SO₂)₂ ou LiBETI) et les mélanges de ceux-ci, tandis que le solvant organique peut notamment être choisi parmi les carbonates tels que le carbonate d'éthylène (ou EC), le carbonate de propylène (ou PC), le carbonate de diméthyle (ou DMC), le carbonate de diéthyle (ou DEC) ou le carbonate de méthyléthyle (MEC), les éthers tels que le diméthoxyéthane, le dioxolane, le dioxane ou le tétraéthylène glycol diméthyléther (ou TEGDME), les phtalates d'alkyles tels que le phtalate de diméthyle (DMP) ou le phtalate de diéthyle (DEP), le diméthylformamide (ou DMF), le sulfite de glycol, la γ-butyrolactone et les mélanges de ceux-ci.

De préférence, le sel de lithium est l'hexafluorophosphate de lithium LiPF₆ tandis que le solvant organique est un carbonate ou un mélange de carbonates, typiquement un mélange EC/PC.

De préférence également, l'électrolyte liquide imprègne un séparateur qui est constitué d'un matériau poreux et qui est disposé entre l'électrode positive et l'électrode négative de la cellule électrochimique.

Ce séparateur peut être en tout matériau apte à accueillir dans sa porosité un électrolyte liquide et chimiquement inerte vis-à-vis des matériaux actifs des électrodes. Ainsi, le séparateur peut notamment être en un polymère poreux tel qu'une polyoléfine ou un mélange de polyoléfines (polyéthylène et/ou polypropylène), un poly(oxyde d'éthylène) (ou PEO), un polyacrylonitrile (ou PAN), un PVdF, un PVdF-HFP ou un mélange de ceux-ci.

Les collecteurs de courant, qu'ils soient terminaux ou bipolaires, peuvent être monocouche, auquel cas ils sont préférentiellement constitués d'une plaque d'aluminium, de cuivre ou d'un alliage d'aluminium, ou bien bicouche, auquel cas ils sont préférentiellement constitués d'une plaque d'aluminium recouverte d'une couche de cuivre. Ils présentent, par exemple, une épaisseur de 20 µm.

Conformément à l'invention, le polymère qui gélifie au contact du solvant organique de l'électrolyte - et qui est appelé plus simplement « polymère gélifiant » dans ce qui suit - peut notamment être l'un quelconque des polymères ayant été proposés dans l'état de la technique pour préparer des électrolytes polymères gélifiés ou un mélange de ceux-ci.

Ainsi, il peut notamment s'agir d'un PEO, d'un PAN, d'un PVdF, d'un PVdF-HFP, d'un poly(chlorure de vinyle) (ou PVC), d'un poly(carbonate de vinylidène) (ou (PVdC), d'un poly(téréphtalamide de *p*-phénylène) (ou PPTA), d'une polyvinylsulfone (ou PVS), d'une polyvinylpyrrolidone (ou PVP), d'un poly(méthacrylate de méthyle) (ou PMMA), du diméthacrylate d'éthylène glycol (ou EGDMA) ou d'un mélange de ceux-ci.

À cet égard, le lecteur est invité à se référer au chapitre 3 (M. Alamgir et K. M. Abraham) de l'ouvrage Lithium batteries: New materials, Developments and Perspectives édité par G. Pistoia, Elsevier 1994, dans lequel est présenté un certain nombre de polymères dont l'utilisation a été proposée pour la réalisation d'électrolytes polymères gélifiés.

Parmi les polymères gélifiants précités, préférence est donné à un polymère choisi parmi les PEO, les PAN, les PVdF, les PVdF-HFP et les mélanges de ceux-ci.

Lors de la fabrication de la batterie Li-ion, le polymère gélifiant peut être introduit dans cette batterie soit à l'état « sec », soit à l'état déjà partiellement gélifié.

Le(s) cadre(s) de scellement est (sont), de préférence, en un matériau isolant électrique, lequel peut être un matériau adhésif biface, par exemple un acrylique biface à coeur en polypropylène (ou PP), poly(téréphtalate d'éthylène) (ou PET) ou en polyuréthanne (ou PU), ou bien une résine thermodurcie telle qu'une résine époxyde.

Quant à l'emballage, il peut être souple (auquel cas, il est, par exemple, réalisé à partir d'un film laminé comprenant une trame en forme de feuille d'aluminium qui est revêtue sur sa surface extérieure d'une couche en PET ou en un polyamide et qui est revêtue sur sa surface intérieure d'une couche en PP ou PE) ou Bien rigide (auquel cas, il est, par exemple, en un métal léger et peu coûteux tel que l'acier inoxydable, l'aluminium ou le titane, ou bien en une résine thermodurcie telle qu'une résine époxyde) selon le type d'application visé.

Qu'elle soit monopolaire ou bipolaire, la batterie Li-ion selon l'invention peut être fabriquée par les techniques de dépôt de matériaux sous forme de couches et d'assemblage de couches qui sont usuellement mises en oeuvre dans la fabrication de batteries Li-ion monopolaires ou bipolaires.

Ainsi, notamment :
- les électrodes positives et négatives peuvent être réalisées par dépôt des matériaux d'électrodes sur les collecteurs de courant par la technique de dépôt par fente à extrusion, plus connue sous l'appellation anglaise « slot-die coating », suivi d'un calandrage à chaud, typiquement à 80°C, pour leur conférer une porosité ;
- les cadres d'étanchéité peuvent être réalisés par des techniques d'impression (sérigraphie, flexographie, ...) ;
- les cadres de scellement peuvent être réalisés par des techniques d'impression (sérigraphie, flexographie,...) ; en variante, il peut s'agir de rubans adhésifs bifaces qui sont déposés sur les collecteurs de courant ; tandis que
- les emballages peuvent être réalisés par thermoscellage dans le cas d'emballages souples et par soudage au laser dans le cas d'emballages rigides.

### BRÈVE DESCRIPTION DES FIGURES

D'autres avantages et caractéristiques de l'invention ressortiront du complément de la description détaillée qui suit, qui est donnée à titre d'illustration de l'invention et qui se réfère aux figures annexées dans lesquelles :
- les figures 1A et 1B sont des vues schématiques en coupe longitudinale d'un exemple d'une batterie Li-ion monopolaire selon l'invention à deux stades différents, la figure 1A montrant cette batterie telle que fabriquée et la figure 1B montrant cette batterie après plusieurs semaines de fonctionnement ;
- les figures 2A et 2B sont des vues schématiques analogues aux figures 1A et 1B mais pour une première variante de réalisation de la batterie Li-ion monopolaire selon l'invention ;
- les figures 3A et 3B sont des vues schématiques analogues aux figures 1A et 1B mais pour une deuxième variante de réalisation de la batterie Li-ion monopolaire selon l'invention ;
- les figures 4A et 4B sont des vues schématiques analogues aux figures 1A et 1B mais pour une troisième variante de la batterie Li-ion monopolaire selon l'invention ;
- les figures 5A et 5B sont des vues schématiques en coupe longitudinale d'un exemple d'une batterie Li-ion bipolaire selon l'invention à deux stades différents, la figure 5A montrant cette batterie telle que fabriquée et la figure 5B montrant cette batterie après plusieurs semaines de fonctionnement ;
- les figures 6A et 6B sont des vues schématiques analogues aux figures 5A et 5B mais pour une variante de réalisation de la batterie Li-ion bipolaire selon l'invention.

Sur ces figures, les mêmes références servent à désigner les mêmes éléments.

Par ailleurs, pour des raisons de clarté, les dimensions des différents éléments représentés sur ces figures ne sont pas en proportion avec leurs dimensions réelles.

### EXPOSÉ DÉTAILLÉ DE MODES DE RÉALISATION PARTICULIERS

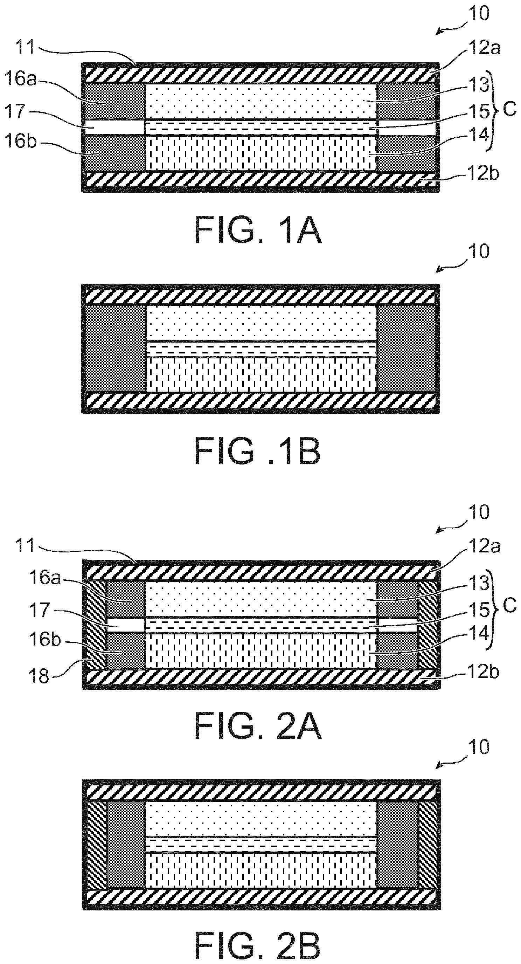

On se réfère tout d'abord à la figure 1A qui représente schématiquement, vue en coupe longitudinale, un exemple d'une batterie Li-ion monopolaire selon l'invention telle qu'elle se présente à l'issue de sa fabrication.

Comme visible sur cette figure, la batterie, qui est référencée 10, comprend dans un emballage 11, qui peut être souple ou rigide, deux collecteurs de courant, 12ₐ et 12_{b}, par exemple en aluminium, entre lesquels est disposée une cellule électrochimique C.

Cette cellule électrochimique comprend une électrode positive 13, par exemple à base de LiFePO₄, qui est au contact du collecteur de courant 12ₐ, et une électrode négative 14, par exemple à base de LTO, qui est au contact du collecteur de courant 12_{b}.

Elle comprend de plus un séparateur 15, par exemple en une polyoléfine ou un mélange de polyoléfines (PE et/ou PP), qui est imbibé d'un électrolyte liquide comprenant un sel de lithium, par exemple LiPF₆, en solution dans un solvant organique, par exemple un mélange EC/PC, et qui est intercalé entre l'électrode positive 13 et l'électrode négative 14 en étant au contact de ces électrodes.

Conformément à l'invention, l'emballage 11 délimite avec les collecteurs de courant 12ₐ et 12_{b} d'une part, et avec la cellule C d'autre part, un espace qui entoure cette cellule et dans lequel sont logés un dispositif d'étanchéité 16 et une zone de vide 17, c'est-à-dire une zone exempte de tout matériau.

Dans la batterie montrée sur la figure 1A, le dispositif d'étanchéité 16 se compose d'un premier cadre d'étanchéité 16ₐ qui entoure l'électrode positive 13 de la cellule C et d'un deuxième cadre d'étanchéité 16_{b} qui entoure l'électrode négative 14 de la cellule C.

La zone de vide 17 entoure, elle, le séparateur 15 en sorte qu'elle est intercalée entre les deux cadres d'étanchéité 16ₐ et 16_{b}.

Chacun des cadres d'étanchéité 16ₐ et 16_{b} comprend un polymère gélifiant, qui va assurer l'étanchéité de la batterie en formant un gel au contact du solvant de l'électrolyte liquide qui est susceptible de s'échapper du séparateur et, donc, un réseau tridimensionnel stable dans lequel cet électrolyte sera emprisonné et, par là même, immobilisé. Ce polymère est, par exemple, un PEO, un PAN, un PVdF ou un PVdF-HFP.

La transformation du polymère en un gel s'accompagnant d'une augmentation de volume de ce polymère, la zone de vide 17 est là pour permettre aux deux cadres d'étanchéité 16ₐ et 16_{b} d'augmenter de volume sans que cette augmentation de volume ne se traduise par l'exercice de contraintes sur les collecteurs de courant 12ₐ et 12_{b} et sur la cellule C, de telles contraintes étant, en effet, susceptibles de provoquer une déformation de ces collecteurs et de cette cellule.

La zone de vide 17 va donc être progressivement remplie par le polymère par confluence des deux cadres d'étanchéité 16ₐ et 16_{b} au fur et à mesure de la gélification de ce polymère jusqu'à être comblée par ce polymère comme illustré sur la figure 1B qui est une vue de la batterie 10 analogue à celle de la figure 1A mais après comblement de la zone de vide 17 par le polymère.

On se réfère à présent aux figures 2A et 2B qui sont des vues schématiques analogues aux figures 1A et 1B mais pour une première variante de réalisation de la batterie 10, la figure 2A montrant cette batterie telle qu'elle se présente à l'issue de sa fabrication et la figure 2B montrant cette batterie après comblement de la zone de vide 17 par le polymère.

Dans cette première variante de réalisation, la batterie 10 ne diffère de celle montrée sur les figures 1A et 1B qu'en ce que l'espace délimité par l'emballage 11 avec les collecteurs de courant 12ₐ et 12_{b} d'une part, et avec la cellule C d'autre part, comprend de plus un cadre de scellement 18 qui entoure à la fois les deux cadres d'étanchéité 16ₐ et 16_{b} et la zone de vide 17, et qui permet non seulement de renforcer l'étanchéité à l'électrolyte de la batterie mais également de garantir que l'écartement des collecteurs de courant 16ₐ et 16_{b} reste constant tout au long de la vie de la batterie.

Le cadre de scellement 18 participe donc au maintien de l'intégrité structurelle et fonctionnelle de la batterie.

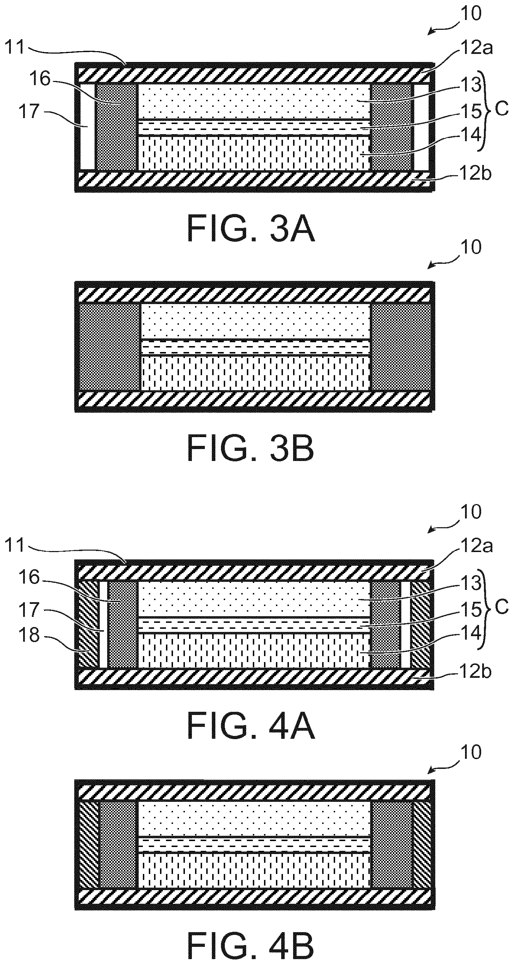

Des vues schématiques analogues aux figures 1A et 1B mais pour une deuxième variante de réalisation de la batterie 10 sont illustrées par les figures 3A et 3B, la figure 3A montrant cette batterie telle qu'elle se présente à l'issue de sa fabrication et la figure 3B montrant cette batterie après comblement de la zone de vide 17 par le polymère.

Dans cette deuxième variante de réalisation, la batterie 10 ne diffère de celle montrée sur les figures 1A et 1B qu'en ce que, d'une part, le dispositif d'étanchéité 16 n'est constitué que d'un seul cadre d'étanchéité qui entoure à la fois l'électrode positive 13, le séparateur 15 et l'électrode négative 14 de la cellule C, et, d'autre part, la zone de vide 17 entoure ce dispositif d'étanchéité.

Ainsi, dans cette deuxième variante de réalisation, la zone de vide 17 va être progressivement remplie puis comblée par le polymère par expansion du dispositif d'étanchéité 16 vers l'extérieur de la batterie.

Des vues schématiques analogues aux figures 1A et 1B mais pour une troisième variante de réalisation de la batterie 10 sont encore illustrées par les figures 4A et 4B, la figure 4A montrant cette batterie telle qu'elle se présente à l'issue de sa fabrication et la figure 4B montrant cette batterie après comblement de la zone de vide 17 par le polymère.

Dans cette troisième variante de réalisation, la batterie 10 ne diffère de celle montrée sur les figures 3A et 3B qu'en ce que l'espace délimité par l'emballage 11 avec les collecteurs de courant 12ₐ et 12_{b} d'une part, et avec la cellule C d'autre part, comprend de plus un cadre de scellement 18 qui entoure la zone de vide 17.

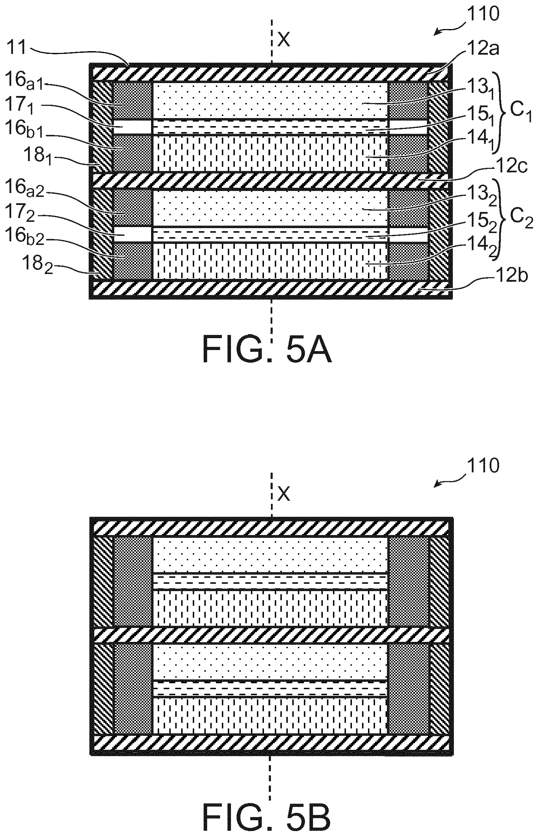

On se réfère à présent à la figure 5A qui représente schématiquement, vu en coupe longitudinale, un exemple d'une batterie Li-ion bipolaire selon l'invention telle qu'elle se présente à l'issue de sa fabrication.

Comme visible sur cette figure, la batterie, qui est référencée 110, comprend dans un emballage 11 deux collecteurs de courant, respectivement 12ₐ et 12_{b}, qui sont dits « terminaux » puisqu'ils sont situés aux deux extrémités de la batterie dans la direction de l'axe X, entre lesquels est disposé un empilement selon l'axe X de plusieurs cellules électrochimiques.

Dans le cas de la batterie 10 montrée sur la figure 5A, cet empilement ne comprend que deux cellules électrochimiques, respectivement C₁ et C₂, pour en simplifier l'illustration, mais l'empilement pourrait tout aussi bien comprendre un nombre plus élevé de cellules électrochimiques sans que cela ne change rien à l'architecture de la batterie.

Chacune des cellules C₁ et C₂ comprend une électrode positive, respectivement 13₁ et 13₂, par exemple à base de LiFePO₄, et une électrode négative, respectivement 14₁ et 14₂, par exemple à base de LTO. Elle comprend de plus un séparateur, respectivement 15₁ et 15₂, par exemple en une polyoléfine ou un mélange de polyoléfines (PE et/ou PP), qui est imbibé d'un électrolyte liquide comprenant un sel de lithium, par exemple LiPF₆, en solution dans un solvant organique, par exemple un mélange EC/PC, et qui est intercalé entre les électrodes positive et négative en étant au contact de ces électrodes.

L'électrode positive 13₁ de la cellule C₁ est au contact du collecteur de courant terminal 12ₐ tandis que l'électrode négative 14₂ de la cellule électrochimique C₂ est au contact du collecteur de courant terminal 12_{b}.

Les cellules C₁ et C₂ sont séparées l'une de l'autre par un troisième collecteur de courant 12_{c} qui est dit « bipolaire » puisqu'il est à la fois au contact de l'électrode négative 14₂ de la cellule C₁ et au contact de l'électrode positive 13₁ de la cellule C₂.

Ce troisième collecteur de courant s'étend, de l'axe X vers l'extérieur de la batterie, c'est-à-dire dans un plan orthogonal à l'axe X, au droit des collecteurs de courant 12ₐ et 12_{b}. En d'autres termes, les trois collecteurs de courant 12ₐ, 12_{b} et 12_{c} ont la même étendue dans un plan orthogonal à l'axe X.

Conformément à l'invention, l'emballage 11 délimite avec les collecteurs de courant 12ₐ et 12_{c} d'une part, et avec la cellule C₁ d'autre part, un premier espace qui entoure cette cellule et dans lequel sont logés un dispositif d'étanchéité 16₁ et une zone de vide 17₁.

De la même manière, l'emballage 11 délimite avec les collecteurs de courant 12_{c} et 12_{b} d'une part, et avec la cellule C₂ d'autre part, un deuxième espace qui entoure cette cellule et dans lequel sont logés un dispositif d'étanchéité 16₂ et une zone de vide 17₂.

Dans l'exemple illustré sur la figure 5A - qui correspond à un mode de réalisation particulièrement préféré d'une batterie Li-ion bipolaire selon l'invention -, chacun des dispositifs d'étanchéité 16₁ et 16₂ se compose d'un premier cadre d'étanchéité, respectivement 16ₐ₁ et 16ₐ₂, qui entoure l'un l'électrode positive 13₁ de la cellule C₁ et l'autre l'électrode positive 13₂ de la cellule C₂, et d'un deuxième cadre d'étanchéité, respectivement 16_{b1} et 16_{b2}, qui entoure l'un l'électrode négative 14₁ de la cellule C1 et l'autre l'électrode négative 14₂ de la cellule C₂.

Les zones de vide 17₁ et 17₂ entourent, elles, les séparateurs 15₁ et 15₂ respectivement en sorte que la zone de vide 17₁ est intercalée entre les deux cadres d'étanchéité 16ₐ₁ et 16_{b1} tandis que la zone de vide 17₂ est intercalée entre les deux cadres d'étanchéité 16ₐ₂ et 16_{b2}.

Les cadres d'étanchéité 16ₐ₁, 16ₐ₂, 16_{b1} et 16_{b2} comprennent tous un polymère gélifiant. Ces cadres d'étanchéité et les zones de vide 17₁ et 17₂ remplissent les mêmes fonctions que celles précédemment décrites pour les cadres d'étanchéité 16ₐ et 16_{b} et pour la zone de vide 17 de la batterie Li-ion monopolaire montrée sur les figures 1A et 1B.

Dans l'exemple illustré sur la figure 5A, l'espace délimité par l'emballage 11 avec les collecteurs de courant 12ₐ et 12_{c} d'une part, et avec la cellule C₁ d'autre part, comprend de plus un cadre de scellement 18₁ qui entoure à la fois les deux cadres d'étanchéité 16ₐ₁ et 16_{b1} et la zone de vide 17₁.

De la même manière, l'espace délimité par l'emballage 11 avec les collecteurs de courant 12_{c} et 12_{b} d'une part, et avec la cellule C2 d'autre part, comprend de plus un cadre de scellement 18₂ qui entoure à la fois les deux cadres d'étanchéité 16ₐ₂ et 16_{b2} et la zone de vide 17₂.

Là également, les cadres de scellement 18₁ et 18₂ remplissent les mêmes fonctions que celles précédemment décrites pour le cadre de scellement 18 de la batterie Li-ion monopolaire montrée sur les figures 2A et 2B.

La batterie Li-ion bipolaire après comblement des zones de vide 17₁ et 17₂ par le polymère est montrée sur la figure 5B.

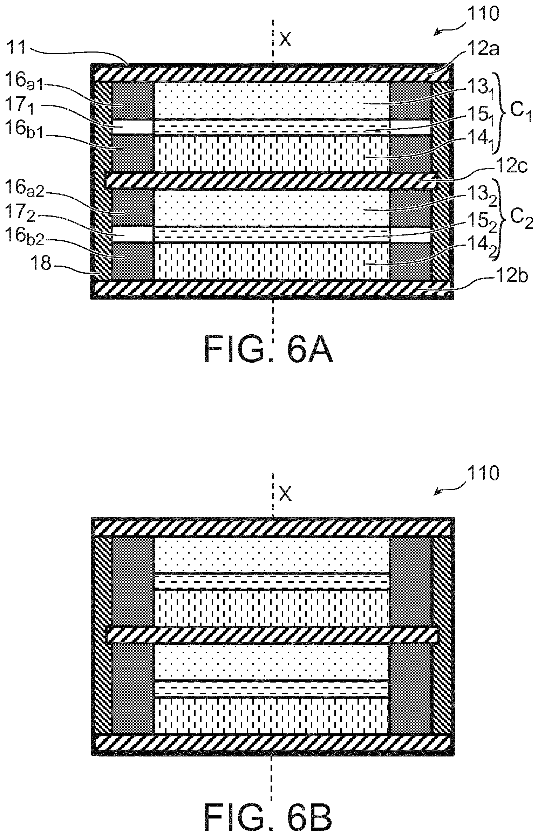

On se réfère maintenant aux figures 6A et 6B qui sont des vues schématiques analogues aux figures 5A et 5B mais pour une variante de réalisation de la batterie 110, la figure 6A montrant cette batterie telle qu'elle se présente à l'issue de sa fabrication et la figure 6B montrant cette batterie après comblement des zones de vide 17₁ et 17₂ par le polymère.

Dans cette variante de réalisation, la batterie 110 diffère de celle montrée sur la figure 5A en ce que le collecteur de courant bipolaire 12_{c} s'étend, de l'axe X vers l'extérieur de la batterie, en-deçà des collecteurs de courant terminaux 12ₐ et 12_{b}.

De ce fait, la batterie Li-ion bipolaire ne comprend qu'un seul cadre de scellement 18 qui s'étend du collecteur de courant 12ₐ au collecteur de courant 12_{b} et qui entoure à la fois le cadre d'étanchéité 16ₐ₁, la zone de vide 17₁, le cadre d'étanchéité 16_{b1}, le collecteur de courant 12_{c}, le cadre d'étanchéité 16ₐ₂, la zone de vide 17₂ et le cadre d'étanchéité 16_{b2}.

L'invention ne se limite nullement aux modes de réalisation qui viennent d'être décrits. Ainsi, notamment, il est parfaitement possible d'appliquer la configuration dispositif d'étanchéité/zone de vide montrée sur les figures 3A et 4A à des cellules électrochimiques d'une batterie Li-ion bipolaire.

### RÉFÉRENCES CITÉES

**[1]** Demande internationale PCT WO 03/047021
**[2]** Brevet US 7,220,516
**[3]** Brevet US 7,097,937
**[4]** Demande de brevet EP 2 073 300
**[5]** Demande internationale PCT WO 2011/157751
**[6]** M. Alamgir et K. M. Abraham, Lithium batteries: New materials, Developments and Perspectives, chapitre 3, édité par G. Pistoia, Elsevier 1994

## Revendications

1. Accumulateur électrochimique (10) au lithium ionique à architecture monopolaire par empilement, comprenant dans un emballage (11) deux collecteurs de courant (12ₐ, 12_{b}) entre lesquels est disposée une cellule électrochimique (C), la cellule électrochimique comprenant une électrode positive (13), une électrode négative (14) et un séparateur (15) qui est intercalé entre l'électrode positive et l'électrode négative et qui est imbibé d'un électrolyte liquide comprenant un sel de lithium en solution dans un solvant organique, **caractérisé en ce que** :
- l'emballage délimite, avec les deux collecteurs de courant et la cellule électrochimique, un espace qui entoure la cellule électrochimique et qui comprend un dispositif d'étanchéité (16) et une zone de vide (17) ;
- le dispositif d'étanchéité comprend un polymère qui gélifie au contact du solvant de l'électrolyte, moyennant quoi le polymère augmente de volume ; et
- la zone de vide est dimensionnée pour être comblée ultérieurement par le polymère suite à sa gélification.

2. Accumulateur électrochimique selon la revendication 1, **caractérisé en ce que** le dispositif d'étanchéité comprend au moins un cadre d'étanchéité qui entoure une première partie de la cellule électrochimique et **en ce que** la zone de vide entoure une deuxième partie de la cellule électrochimique.

3. Accumulateur électrochimique selon la revendication 2, **caractérisé en ce que** le dispositif d'étanchéité comprend un premier cadre d'étanchéité (16ₐ) qui entoure l'électrode positive de la cellule électrochimique et un deuxième cadre d'étanchéité (16_{b}) qui entoure l'électrode négative de la cellule électrochimique, et **en ce que** la zone de vide entoure le séparateur de la cellule électrochimique.

4. Accumulateur électrochimique selon la revendication 1, **caractérisé en ce que** le dispositif d'étanchéité comprend un cadre d'étanchéité qui entoure l'électrode positive, l'électrode négative et le séparateur de la cellule électrochimique, et **en ce que** la zone de vide entoure le cadre d'étanchéité.

5. Accumulateur électrochimique selon l'une quelconque des revendications 1 à 4, **caractérisé en ce que** l'espace comprend de plus un cadre de scellement (18) qui entoure le dispositif d'étanchéité et la zone de vide.

6. Accumulateur électrochimique (110) au lithium ionique à architecture bipolaire, comprenant dans un emballage (11) deux collecteurs de courant terminaux (12ₐ, 12_{b}) entre lesquels est disposé un empilement, selon un axe X, de *n* cellules électrochimiques (C₁, C₂), *n* étant un entier au moins égal à 2, dans lequel :
- chaque cellule électrochimique comprend une électrode positive (13₁, 13₂), une électrode négative (14₁, 14₂) et un séparateur (15₁, 15₂) qui est intercalé entre l'électrode positive et l'électrode négative et qui est imbibé d'un électrolyte liquide comprenant un sel de lithium en solution dans un solvant organique ;
- les *n* cellules électrochimiques sont séparées les unes des autres par *n-1* collecteurs de courant bipolaires (12_{c}) ;
**caractérisé en ce que** :
- l'emballage délimite, avec les deux collecteurs de courant terminaux, les *n-1* collecteurs de courant bipolaires et les *n* cellules électrochimiques, *n* espaces qui entourent chacun une cellule électrochimique et qui comprennent chacun un dispositif d'étanchéité (16₁, 16₂) et une zone de vide (17₁, 17₂) ;
- le dispositif d'étanchéité de chaque espace comprend un polymère qui gélifie au contact du solvant de l'électrolyte, moyennant quoi le polymère augmente de volume ; et
- la zone de vide de chaque espace est dimensionnée pour être comblée ultérieurement par le polymère suite à sa gélification.

7. Accumulateur électrochimique selon la revendication 6, **caractérisé en ce que** le dispositif d'étanchéité de chaque espace comprend au moins un cadre d'étanchéité qui entoure une première partie de la cellule électrochimique entourée par cet espace, et **en ce que** la zone de vide entoure une deuxième partie de la cellule électrochimique entourée par cet espace.

8. Accumulateur électrochimique selon la revendication 7, **caractérisé en ce que** le dispositif d'étanchéité comprend un premier cadre d'étanchéité (16ₐ₁, 16ₐ₂) qui entoure l'électrode positive de la cellule électrochimique et un deuxième cadre d'étanchéité (16_{b1}, 16_{b2}) qui entoure l'électrode négative de la cellule électrochimique, et **en ce que** la zone de vide entoure le séparateur de la cellule électrochimique.

9. Accumulateur électrochimique selon la revendication 6, **caractérisé en ce que** le dispositif d'étanchéité de chaque espace comprend un cadre d'étanchéité qui entoure à la fois l'électrode positive, l'électrode négative et le séparateur de la cellule électrochimique entourée par cet espace, et **en ce que** la zone de vide entoure le cadre d'étanchéité.

10. Accumulateur électrochimique selon l'une quelconque des revendications 6 à 9, **caractérisé en ce que** les *n-1* collecteurs de courant bipolaires s'étendent, de l'axe X vers l'extérieur de l'accumulateur, au droit des deux collecteurs de courant terminaux.

11. Accumulateur électrochimique selon la revendication 10, **caractérisé en ce que** chaque espace comprend un cadre de scellement (18₁, 18₂) qui entoure le dispositif d'étanchéité et la zone de vide de l'espace.

12. Accumulateur électrochimique selon l'une quelconque des revendications 6 à 9, **caractérisé en ce que** les *n-1* collecteurs de courant bipolaires s'étendent, de l'axe X vers l'extérieur de l'accumulateur, en-deçà des deux collecteurs de courant terminaux.

13. Accumulateur électrochimique selon la revendication 12, **caractérisé en ce qu'**il comprend un cadre de scellement (18) qui s'étend d'un collecteur de courant terminal à l'autre collecteur de courant terminal et qui entoure les *n* espaces les *n-1* collecteurs de courant bipolaires.

14. Accumulateur électrochimique selon l'une quelconque des revendications 1 à 13, **caractérisé en ce que** le polymère est un poly(oxyde d'éthylène), un polyacrylonitrile, un poly(fluorure de vinylidène), un poly(fluorure de vinylidène-*co-*hexafluoropropylène), un poly(chlorure de vinyle), un poly(carbonate de vinylidène), un poly(téréphtalamide de p-phénylène), une polyvinylsulfone, une polyvinylpyrrolidone, un poly(méthacrylate de méthyle) ou du diméthacrylate d'éthylène glycol.

15. Accumulateur électrochimique selon la revendication 14, **caractérisé en ce que** le polymère est un poly(oxyde d'éthylène), un polyacrylonitrile, un poly(fluorure de vinylidène) ou un poly(fluorure de vinylidène-*co*- hexafluoropropylène).

## Patentansprüche

1. Elektrochemischer Lithium-Ionen-Akkumulator (10) mit monopolarer Stapelarchitektur, enthaltend in einem Gehäuse (11) zwei Stromabnehmer (12ₐ, 12_{b}), zwischen denen eine elektrochemische Zelle (C) angeordnet ist, wobei die elektrochemische Zelle eine positive Elektrode (13), eine negative Elektrode (14) und einen Separator (15) umfasst, der zwischen der positiven Elektrode und der negativen Elektrode eingesetzt ist und der mit einem flüssigen Elektrolyten getränkt ist, der ein Lithiumsalz in Lösung in einem organischen Lösungsmittel umfasst,
**dadurch gekennzeichnet, dass**
- das Gehäuse mit den beiden Stromabnehmern und der elektrochemischen Zelle Raum begrenzt, der die elektrochemische Zelle umgibt und eine Dichtungsvorrichtung (16) und einen Vakuumbereich (17) enthält,
- die Dichtungsvorrichtung ein Polymer enthält, das bei Kontakt mit dem Lösungsmittel des Elektrolyten geliert, wodurch das Polymer an Volumen zunimmt; und
- der Vakuumbereich so bemessen ist, dass er nachträglich mit dem Polymer nach seiner Gelierung gefüllt wird.

2. Elektrochemischer Akkumulator nach Anspruch 1, **dadurch gekennzeichnet, dass** die Dichtungsvorrichtung zumindest einen Dichtungsrahmen enthält, der einen ersten Teil der elektrochemischen Zelle umgibt, und dass der Vakuumbereich einen zweiten Teil der elektrochemischen Zelle umgibt.

3. Elektrochemischer Akkumulator nach Anspruch 2, **dadurch gekennzeichnet, dass** die Dichtungsvorrichtung einen ersten Dichtungsrahmen (16ₐ) enthält, der die positive Elektrode der elektrochemischen Zelle umgibt, sowie einen zweiten Dichtungsrahmen (16_{b}), der die negative Elektrode der elektrochemischen Zelle umgibt, und dass der Vakuumbereich den Separator der elektrochemischen Zelle umgibt.

4. Elektrochemischer Akkumulator nach Anspruch 1, **dadurch gekennzeichnet, dass** die Dichtungsvorrichtung einen Dichtungsrahmen enthält, der die positive Elektrode, die negative Elektrode und den Separator der elektrochemischen Zelle umgibt, und dass der Vakuumbereich den Dichtungsrahmen umgibt.

5. Elektrochemischer Akkumulator nach einem der Ansprüche 1 bis 4, **dadurch gekennzeichnet, dass** der Raum ferner einen Versiegelungsrahmen (18) enthält, der die Dichtungsvorrichtung und den Vakuumbereich umgibt.

6. Elektrochemischer Lithium-Ionen-Akkumulator (110) mit bipolarer Architektur, enthaltend in einem Gehäuse (11) zwei endseitige Stromabnehmer (12ₐ, 12_{b}), zwischen denen eine Stapelung von *n* elektrochemischen Zellen (C₁, C₂) in einer X-Achse angeordnet ist, wobei *n* eine ganze Zahl zumindest gleich 2 ist, wobei:
- jede elektrochemische Zelle eine positive Elektrode (13₁, 13₂), eine negative Elektrode (14₁, 14₂) und einen Separator (15₁, 15₂) enthält, der zwischen der positiven Elektrode und der negativen Elektrode eingesetzt ist und der mit einem flüssigen Elektrolyten getränkt ist, der ein Lithiumsalz in Lösung in einem organischen Lösungsmittel enthält;
- die *n* elektrochemischen Zellen durch *n-1* bipolare Stromabnehmer (12_{c}) voneinander getrennt sind;
**dadurch gekennzeichnet, dass**:
- das Gehäuse mit den beiden endseitigen Stromabnehmern, den *n-1* bipolaren Stromabnehmern und den *n* elektrochemischen Zellen *n* Räume eingrenzt, die jeweils eine elektrochemische Zelle umgeben und jeweils eine Dichtungsvorrichtung (16₁, 16₂) und einen Vakuumbereich (17₁, 17₂) enthalten;
- die Dichtungsvorrichtung eines jeden Raums ein Polymer enthält, das bei Kontakt mit dem Lösungsmittel des Elektrolyten geliert, wodurch das Polymer an Volumen zunimmt; und
- der Vakuumbereich eines jeden Raums so bemessen ist, dass er nachträglich mit dem Polymer nach seiner Gelierung gefüllt wird.

7. Elektrochemischer Akkumulator nach Anspruch 6, **dadurch gekennzeichnet, dass** die Dichtungsvorrichtung eines jeden Raums zumindest einen Dichtungsrahmen enthält, der einen ersten Teil der elektrochemischen Zelle umgibt, der von diesem Raum umgeben wird, und dass der Vakuumbereich einen zweiten Teil der elektrochemischen Zelle umgibt, der von diesem Raum umgeben wird.

8. Elektrochemischer Akkumulator nach Anspruch 7, **dadurch gekennzeichnet, dass** die Dichtungsvorrichtung einen ersten Dichtungsrahmen (16ₐ₁, 16ₐ₂) enthält, der die positive Elektrode der elektrochemischen Zelle umgibt, sowie einen zweiten Dichtungsrahmen (16_{b1}, 16_{b2}), der die negative Elektrode der elektrochemischen Zelle umgibt, und dass der Vakuumbereich den Separator der elektrochemischen Zelle umgibt.

9. Elektrochemischer Akkumulator nach Anspruch 6, **dadurch gekennzeichnet, dass** die Dichtungsvorrichtung eines jeden Raums einen Dichtungsrahmen enthält, der zugleich die positive Elektrode, die negative Elektrode und den Separator der elektrochemischen Zelle umgibt, die von diesem Raum umgeben wird, und dass der Vakuumbereich den Dichtungsrahmen umgibt.

10. Elektrochemischer Akkumulator nach einem der Ansprüche 6 bis 9, **dadurch gekennzeichnet, dass** die *n-1* bipolaren Stromabnehmer sich von der X-Achse nach außerhalb des Akkumulators im Bereich der beiden endseitigen Stromabnehmer erstrecken.

11. Elektrochemischer Akkumulator nach Anspruch 10, **dadurch gekennzeichnet, dass** jeder Raum einen Versiegelungsrahmen (18₁, 18₂) enthält, der die Dichtungsvorrichtung und den Vakuumbereich des Raums umgibt.

12. Elektrochemischer Akkumulator nach einem der Ansprüche 6 bis 9, **dadurch gekennzeichnet, dass** die *n-1* bipolaren Stromabnehmer sich von der X-Achse nach außerhalb des Akkumulators über die beiden endseitigen Stromabnehmer hinaus erstrecken.

13. Elektrochemischer Akkumulator nach Anspruch 12, **dadurch gekennzeichnet, dass** er einen Versiegelungsrahmen (18) enthält, der sich von dem einem endseitigen Stromabnehmer zum anderen endseitigen Stromabnehmer erstreckt und die n Räume der *n-1* bipolaren Stromabnehmer umgibt.

14. Elektrochemischer Akkumulator nach einem der Ansprüche 1 bis 13, **dadurch gekennzeichnet, dass** das Polymer Polyethylenoxid, Polyacrylnitril, Polyvinylidenfluorid, Polyvinylidenfluorid-Cohexafluorpropylen, Polyvinylchlorid, Polyvinylidencarbonat, Poly-p-phenylenterephthalamid, Polyvinylsulfon, Polyvinylpyrrolidon, Polymethylmethacrylat oder Ethylenglykol-Dimethacrylat ist.

15. Elektrochemischer Akkumulator nach Anspruch 14, **dadurch gekennzeichnet, dass** das Polymer Polyethylenoxid, Polyacrylnitril, Polyvinylidenfluorid oder Polyvinylidenfluorid-Cohexafluorpropylen ist.

## Claims

1. Lithium-ion electrochemical accumulator (10) of stacked monopolar architecture, comprising in a casing (11) two current collectors (12ₐ, 12_{b}) between which an electrochemical cell (C) is arranged, the electrochemical cell comprising a positive electrode (13), a negative electrode (14) and a separator (15) which is intercalated between the positive electrode and the negative electrode and which is impregnated with a liquid electrolyte comprising a lithium salt in solution in an organic solvent, **characterized in that**:
- the casing delimits, with the two current collectors and the electrochemical cell, a space which surrounds the electrochemical cell and which comprises a leak-tight device (16) and a void zone (17);
- the leak-tight device comprises a polymer that gels in contact with the solvent of the electrolyte, whereby the polymer increases in volume; and
- the void zone is sized so as to be subsequently filled entirely with the polymer after gelling thereof.

2. Electrochemical accumulator according to claim 1, **characterized in that** the leak-tight device comprises at least one leak-tight frame which surrounds a first part of the electrochemical cell and **in that** the void zone surrounds a second part of the electrochemical cell.

3. Electrochemical accumulator according to claim 2, **characterized in that** the leak-tight device comprises a first leak-tight frame (16ₐ) which surrounds the positive electrode of the electrochemical cell and a second leak-tight frame (16_{b}) which surrounds the negative electrode of the electrochemical cell and **in that** the void zone surrounds the separator of the electrochemical cell.

4. Electrochemical accumulator according to claim 1, **characterized in that** the leak-tight device comprises a leak-tight frame which surrounds the positive electrode, the negative electrode and the separator of the electrochemical cell, and **in that** the void zone surrounds the leak-tight frame.

5. Electrochemical accumulator according to any of claims 1 to 4, **characterized in that** the space further comprises a sealing frame (18) surrounding the leak-tight device and the void zone.

6. Lithium-ion electrochemical accumulator (110) of bipolar architecture, comprising in a casing (11) two end current collectors (12ₐ, 12_{b}) between which a stack is arranged along an axis X of *n* electrochemical cells (C₁, C₂), *n* being an integer of at least 2, in which:
- each electrochemical cell comprises a positive electrode (13₁, 13₂), a negative electrode (14₁, 14₂) and a separator (15₁, 15₂) which is intercalated between the positive electrode and the negative electrode and which is impregnated with a liquid electrolyte comprising a lithium salt in solution in an organic solvent;
- the *n* electrochemical cells are separated from one another by *n-1* bipolar current collectors (12_{c});
**characterised in that**:
- the casing delimits, with the two end current collectors, the *n-1* bipolar current collectors and the *n* electrochemical cells, n spaces which each surround an electrochemical cell and which each comprise a leak-tight device (16₁, 16₂) and a void zone (17₁, 17₂);
- the leak-tight device of each space comprises a polymer that gels in contact with the solvent of the electrolyte, whereby the polymer increases in volume; and
- the void zone of each space is sized so as to be subsequently filled entirely with the polymer after gelling thereof.

7. Electrochemical accumulator according to claim 6, **characterised in that** the leak-tight device of each space comprises at least one leak-tight frame which surrounds a first part of the electrochemical cell surrounded by this space, and **in that** the void zone surrounds a second part of the electrochemical cell surrounded by this space.

8. Electrochemical accumulator according to claim 7, **characterised in that** the leak-tight device comprises a first leak-tight frame (16ₐ₁, 16ₐ₂) which surrounds the positive electrode of the electrochemical cell and a second leak-tight frame (16_{b1}, 16_{b2}) which surrounds the negative electrode of the electrochemical cell, and **in that** the void zone surrounds the separator of the electrochemical cell.

9. Electrochemical accumulator according to claim 6, **characterised in that** the leak-tight device of each space comprises a leak-tight frame which surrounds at the same time the positive electrode, the negative electrode and the separator of the electrochemical cell surrounded by this space, and **in that** the void zone surrounds the leak-tight frame.

10. Electrochemical accumulator according to any of claims 6 to 9, **characterised in that** the *n-1* bipolar current collectors extend, from axis X outwardly from the accumulator, in line with the two end current collectors.

11. Electrochemical accumulator according to claim 10, **characterised in that** each space comprises a sealing frame (18₁, 18₂) which surrounds the leak-tight device and the void zone of the space.

12. Electrochemical accumulator according to any of claims 6 to 9, **characterised in that** the *n-1* bipolar current collectors extend, from the axis X outwardly from the accumulator, short of the two end current collectors.

13. Electrochemical accumulator according to claim 12, **characterised in that** it comprises a sealing frame (18) which extends from one end current collector to the other end current collector and which surrounds the n spaces and the n-1 bipolar current collectors.

14. Electrochemical accumulator according to any of claims 1 to 13, **characterised in that** the polymer is a poly(ethylene oxide), a polyacrylonitrile, a poly(vinylidene fluoride), a poly(vinylidene fluoride-co-hexafluoropropylene), a poly(vinyl chloride), a poly(vinylidene carbonate), a poly(p-phenylene terephthalamide), a polyvinylsulfone, a polyvinylpyrrolidone, a poly(methylmethacrylate) or ethylene glycol dimethacrylate.

15. Electrochemical accumulator according to claim 14, **characterised in that** the polymer is a poly(ethylene oxide), a polyacrylonitrile, a poly(vinylidene fluoride) or a poly(vinylidene fluoride-co-hexafluoropropylene).
